# EUROPEAN PATENT APPLICATION

(11) **EP 4 492 720 A1**
(43) Date of publication of application: **15.01.2025**
(21) Application number: 23777787.5
(22) Date of filing: 09.03.2023
(51) Int. Cl.: H04L 5/00, H04W 72/04

(54) **COMMUNICATION METHOD AND APPARATUS**

(30) Priority: 31.03.2022 CN 202210346423
(71) Applicant: Huawei Technologies Co., Ltd., Shenzhen, Guangdong 518129 (CN)
(72) Inventor: ZHANG, Lili, Shenzhen, Guangdong 518129 (CN); DAI, Xizeng, Shenzhen, Guangdong 518129 (CN); LUO, Qingquan, Shenzhen, Guangdong 518129 (CN); LIU, Jianghua, Shenzhen, Guangdong 518129 (CN); LI, Chao, Shenzhen, Guangdong 518129 (CN)
(74) Representative: Isarpatent
(86) International application number: PCT/CN2023/080412
(87) International publication number: WO 2023/185409

(57) **Abstract**

Embodiments of this application provide a communication method and apparatus. A network device indicates a band and/or a carrier before switching of a terminal device and a band and/or a carrier after the switching of the terminal device, so that the terminal device can clearly obtain a specific band and/or carrier to be interrupted and can be switched to a target frequency band and/or carrier. This avoids a problem of reconfiguring a band corresponding to a channel of the terminal device, reduces a processing delay of the terminal device, and improves data transmission performance.

## Description

This application claims priority to Chinese Patent Application No. 202210346423.3, filed with the China National Intellectual Property Administration on March 31, 2022 and entitled "COMMUNICATION METHOD AND APPARATUS", which is incorporated herein by reference in its entirety.

### TECHNICAL FIELD

Embodiments of this application relate to the communication field, and more specifically, to a communication method and apparatus.

### BACKGROUND

Currently, when a terminal device is switched between states, the following scenario may occur: For example, a state in which the terminal device sends a radio frequency chain in a slot #1 is a state #1 (for example, the state #1 is that a band #A is used on a channel #1, and a band #2 is used on a channel #2), and two pieces of downlink control information (downlink control information, DCI) may be received in a slot #2, indicating bands used when the terminal device is switched to a state #2 (for example, DCI #1 indicates to use the band #A, and DCI #2 indicates to use a band #C).

The terminal device cannot simultaneously process the two pieces of downlink control information. Therefore, for example, the terminal device may first process the 1^{st} piece of downlink control information, and then process the 2^{nd} piece of control information. In this case, the terminal device may determine, by default with reference to the state #1 before the switching, the bands indicated by the corresponding downlink control information. For example, the terminal device still uses the band #A on the channel #1, uses the band #C on the channel #2, and starts to configure a channel parameter. However, the channel #2 of the terminal device may not support the band #C. In this case, the terminal device needs to cancel the previously configured channel parameter, and reconfigure a channel parameter. Therefore, a processing delay of the terminal device is prolonged. Therefore, how to avoid the reconfiguration of the band corresponding to the channel and shorten the processing delay of the terminal device becomes a problem urgently to be resolved.

### SUMMARY

Embodiments of this application provide a communication method and apparatus. A network device indicates a band and/or a carrier before switching of a terminal device and a band and/or a carrier after the switching of the terminal device, so that the terminal device can clearly obtain a specific band and/or carrier to be interrupted and can be switched to a target frequency band and/or carrier. This avoids a problem of reconfiguring a band corresponding to a channel of the terminal device, reduces a processing delay of the terminal device, and improves data transmission performance.

According to a first aspect, a communication method is provided. The method may be performed by a terminal device (for example, user equipment), or may be performed by a component (for example, a chip or a circuit) of the terminal device. This is not limited herein.

The method includes: The terminal device receives first information from a network device, where the first information includes N information blocks, the N information blocks includes a j^{th} information block, the j^{th} information block includes a first field, the first field indicates a band and/or a carrier after switching of the terminal device, the j^{th} information block is associated with a band and/or a carrier before the switching of the terminal device, and N is a positive integer. The terminal device based transmits, on the first information, uplink data in the band and/or the carrier after the switching.

It should be understood that, in this application, "the j^{th} information block is associated with a band and/or a carrier before the switching of the terminal device" may also be understood as that the network device may configure a correspondence between each of the N information blocks and a band and/or a carrier for the terminal device by using RRC signaling; or a correspondence between each of the N information blocks and a band and/or a carrier is predefined. For example, a correspondence between locations of the N information blocks and N bands and/or carriers before the switching is predefined.

In this application, "a band and/or a carrier before switching" may also be understood as a band and/or a band currently used by the terminal device, or may be understood as "a source band and/or carrier"; and "a band and/or a carrier after the switching" may also be understood as "a target band and/or carrier".

In this application, the mentioned "fields" may indicate various content, or may be understood as that information (for example, bits) carried in the fields indicates corresponding content. The "field" in this application may also be understood as "identification information".

In other words, the foregoing technical solution may also be understood as follows: A terminal device receives first information from a network device, where the first information includes N information blocks; the terminal device determines a first information block from the N information blocks, where the first information block includes a first identifier, and the first identifier indicates a target band and/or carrier; the terminal device determines a source band and/or carrier based on a location of the first information block in the N information blocks; and the terminal device is switched from the source band and/or carrier to the target band and/or carrier.

Based on the foregoing technical solution, in this application, each information block in the first information may be implicitly associated with a band and/or a carrier before switching of the terminal device, and a first field in each information block may indicate a band and/or a carrier after the switching, so that the terminal device determines a specific band/carrier to be interrupted and is switched to a target frequency band/carrier. This avoids a problem of reconfiguring a band corresponding to a channel of the terminal device, reduces a processing delay of the terminal device, and improves data transmission performance.

In a possible implementation, the j^{th} information block further includes a second field, the second field indicates a time offset between the first information and the uplink data scheduled by the first information, and the uplink data is transmitted in the band and/or the carrier after the switching.

In this application, the "time offset" may alternatively be a slot offset or a symbol offset, or may be the slot offset and the symbol offset.

In this application, the "uplink data" may also be understood as that the uplink data is located in the band and/or the carrier after the switching. That is, the terminal device may transmit the uplink data in the band and/or the carrier after the switching.

Based on the foregoing technical solution, in this application, the terminal device may determine, by using the first information, a specific slot in which or a specific symbol on which the uplink data is sent by using a band/carrier after switching, so that after completing the switching between the states, the terminal device receives the data in the specific slot based on the indication of the second field. This can avoid that the terminal device receives the data before completing the switching between the states, so that data transmission performance is improved.

In a possible implementation, the method further includes: The terminal device sends sixth information to the network device, where the sixth information is used by the network device to determine the first information, where the sixth information includes a correspondence between at least one channel of the terminal device and a band, and the band is a band supported by the at least one channel; the sixth information includes at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group; the sixth information includes at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or the sixth information includes at least a switching correspondence that is between bands and that is in a case of switching of the terminal device from at least one first band to at least one second band.

In this application, "the band of the first band group" may also be understood as at least one first band, and "the band of the second band group" may also be understood as at least one second band. In this case, the first state may be understood as that the terminal device supports the first quantity of sent radio frequency chains in the at least one first band, and the second state may be understood as that the terminal device supports the second quantity of sent radio frequency chains in the at least one second band.

In this application, the switching correspondence between the bands when the terminal device is switched from the at least one first band to the at least one second band may be understood as switching of the terminal device from a 1^{st} first band to a 1^{st} second band. Specifically, it may be understood as corresponding switching from the 1^{st} first band to the 1^{st} second band, corresponding switching from a 2^{nd} first band to a 2^{nd} second band, or the like.

In this application, that the terminal device reports the switching delay between the first state and the second state may also be understood as that the terminal device may perform switching between the first state and the second state, that is, implicitly indicates a switching correspondence between the first state and the second state.

Based on the foregoing technical solution, in this application, the terminal device may report, to the network device, bands supported by each channel, or a corresponding switching correspondence between bands when switching is performed between states, so that the network device can clearly indicate a specific band from which the terminal device needs be switched to a target band. This avoids a problem of reconfiguring a band corresponding to a channel of the terminal device, reduces a processing delay of the terminal device, and improves data transmission performance. In addition, the terminal device may further report a switching delay needed for the switching between the states, so that the network device can determine the scheduled uplink data.

According to a second aspect, a communication method is provided. The method may be performed by a terminal device (for example, user equipment), or may be performed by a component (for example, a chip or a circuit) of the terminal device. This is not limited herein.

The method includes: The terminal device receives second information from a network device, where the second information includes M information blocks, a k^{th} information block in the M information blocks is associated with a band pair of the terminal device, the band pair includes a band before switching of the terminal device and a band after the switching of the terminal device, and M is a positive integer. The terminal device transmits, based on the second information, uplink data in the band after the switching.

The foregoing technical solution may also be understood as follows: A terminal device receives second information from a network device, where the second information includes M information blocks; the terminal device determines a first information block from the M information blocks; the terminal device determines a band pair based on a location of the first information block in the M information blocks; and the terminal device is switched from a source band to a target band based on the determined band pair. For example, each of the M information blocks may correspond to an index of one band pair. For example, a 1^{st} information block corresponds to a band pair #1, and a 2^{nd} information block corresponds to a band pair #2. A correspondence between a band pair and each of the M information blocks may be sent by the network device to the terminal device by using RRC signaling, or may be predefined. For example, the network device may configure a correspondence between a location of each of the M information blocks and a band pair for the terminal device by using RRC signaling.

Based on the foregoing technical solution, in this application, each information block in the second information may be implicitly associated with a band pair, namely, a band before switching and a band after the switching, so that the terminal device determines a specific band/carrier to be interrupted and is switched to a target frequency band/carrier. This avoids a problem of reconfiguring a band corresponding to a channel of the terminal device, reduces a processing delay of the terminal device, and improves data transmission performance.

In a possible implementation, the k^{th} information block further includes a third field, and the third field indicates a carrier after the switching of the terminal device.

Based on the foregoing technical solution, in this application, each information block in the second information may further indicate the carrier after the switching. In other words, the terminal device may determine a carrier to which a specific band is switched, so that a processing delay of the terminal device is reduced, and data transmission performance is improved.

In a possible implementation, the k^{th} information block includes a second field, the second field indicates a time offset between the second information and uplink data scheduled by the second information, and the uplink data is transmitted in the band or the carrier after the switching.

Based on the foregoing technical solution, in this application, the terminal device may determine, by using the second information, a specific slot in which or a specific symbol on which the uplink data is sent by using a band/carrier after switching, so that after completing the switching between the states, the terminal device receives the data in the specific slot based on the indication of the second field. This can avoid that the terminal device receives the data before completing the switching between the states, so that data transmission performance is improved.

In a possible implementation, the method further includes: The terminal device sends sixth information to the network device, where the sixth information is used by the network device to determine the second information, where the sixth information includes a correspondence between at least one channel of the terminal device and a band, and the band is a band supported by the at least one channel; the sixth information includes at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group; the sixth information includes at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or the sixth information includes at least a switching correspondence that is between bands and that is in a case of switching of the terminal device from at least one first band to at least one second band.

Based on the foregoing technical solution, in this application, the terminal device may report, to the network device, bands supported by each channel, or a corresponding switching correspondence between bands when switching is performed between states, so that the network device can clearly indicate a specific band from which the terminal device needs be switched to a target band. This avoids a problem of reconfiguring a band corresponding to a channel of the terminal device, reduces a processing delay of the terminal device, and improves data transmission performance. In addition, the terminal device may further report a switching delay needed for the switching between the states, so that the network device can determine the scheduled uplink data.

According to a third aspect, a communication method is provided. The method may be performed by a terminal device (for example, user equipment), or may be performed by a component (for example, a chip or a circuit) of the terminal device. This is not limited herein.

The method includes: The terminal device receives third information from a network device, where the third information includes a first field, the first field indicates a band and/or a carrier after switching of the terminal device, and a band and/or a carrier before the switching are/is determined by the terminal device according to a preset rule, or the band and/or the carrier before the switching are/is indicated by the network device. The terminal device transmits, based on the third information, data in the band and/or the carrier after the switching.

Based on the foregoing technical solution, in this application, the third information may explicitly indicate the band and/or the carrier after the switching, and may explicitly or implicitly indicate the band and/or the carrier before the switching, so that the terminal device determines a specific band/carrier to be interrupted and is switched to a target frequency band/carrier. This avoids a problem of reconfiguring a band corresponding to a channel of the terminal device, reduces a processing delay of the terminal device, and improves data transmission performance.

In a possible implementation, the third information further includes a second field, the second field indicates a time offset between the third information and uplink data scheduled by the third information, and the data is transmitted in the band and/or the carrier after the switching.

Based on the foregoing technical solution, in this application, the terminal device may determine, by using the third information, a specific slot in which or a specific symbol on which the uplink data is sent by using a band/carrier after switching, so that after completing the switching between the states, the terminal device receives the data in the specific slot based on the indication of the second field. This can avoid that the terminal device receives the data before completing the switching between the states, so that data transmission performance is improved.

In a possible implementation, the third information further includes a fourth field, and the fourth field indicates a second table in which the time offset is located, or the fourth field indicates an index or a location of the time offset in a first table.

Based on the foregoing technical solution, in this application, the network device may indicate the location of the time offset, and the terminal device may determine, based on the indication of the network device, the slot in which the data is sent.

In a possible implementation, the method further includes: The terminal device sends sixth information to the network device, where the sixth information is used by the network device to determine the second information, where the sixth information includes a correspondence between at least one channel of the terminal device and a band, and the band is a band supported by the at least one channel; the sixth information includes at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group; the sixth information includes at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or the sixth information includes at least a switching correspondence that is between bands and that is in a case of switching of the terminal device from at least one first band to at least one second band.

Based on the foregoing technical solution, in this application, the terminal device may report, to the network device, bands supported by each channel, or a corresponding switching correspondence between bands when switching is performed between states, so that the network device can clearly indicate a specific band from which the terminal device needs be switched to a target band. This avoids a problem of reconfiguring a band corresponding to a channel of the terminal device, reduces a processing delay of the terminal device, and improves data transmission performance.

According to a fourth aspect, a communication method is provided. The method may be performed by a terminal device (for example, user equipment), or may be performed by a component (for example, a chip or a circuit) of the terminal device. This is not limited herein.

The method includes: The terminal device receives, fourth information from a network device, where the fourth information includes a fifth field, and the fifth field indicates a first band after switching of the terminal device; and the fourth information further includes a sixth field, the sixth field indicates the terminal device to receive fifth information, and the fifth information indicates a second band after the switching of the terminal device. The terminal device transmits, based on the fourth information and the fifth information, uplink data in the band after the switching. Alternatively, the fourth information further includes a seventh field, and the seventh field indicates lag time for the fifth field to take effect. The terminal device transmits, based on the fourth information, the uplink data in the band after the switching.

In this application, the "lag time" may also be understood as a "time window", a "time period", or a "time offset".

Based on the foregoing technical solution, in this application, the network device may indicate the terminal device to wait for the fifth information after the terminal device receives a fourth message, and determine, based on both the fourth information and the fifth information, the band before the switching and the band after the switching. Alternatively, there is the effective lag time in the first band that is after the switching and that is indicated in the fourth information. To be specific, after the terminal device receives the fourth information, the terminal device does not immediately perform parameter configuration, the network device further sends the fifth information during waiting of the terminal device, and finally, the terminal device may determine, based on both the fourth information and the fifth information, the band before the switching and the band after the switching. In this way, the terminal device determines a specific band/carrier to be interrupted and is switched to a target frequency band/carrier. This avoids a problem of reconfiguring a band corresponding to a channel of the terminal device, reduces a processing delay of the terminal device, and improves data transmission performance.

In a possible implementation, in a possible implementation, the method further includes: The terminal device sends sixth information to the network device, where the sixth information is used by the network device to determine the second information, where the sixth information includes a correspondence between at least one channel of the terminal device and a band, and the band is a band supported by the at least one channel; the sixth information includes at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group; the sixth information includes at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or the sixth information includes at least a switching correspondence that is between bands and that is in a case of switching of the terminal device from at least one first band to at least one second band.

Based on the foregoing technical solution, in this application, the terminal device may report, to the network device, bands supported by each channel, or a corresponding switching correspondence between bands when switching is performed between states, so that the network device can clearly indicate a specific band from which the terminal device needs be switched to a target band. This avoids a problem of reconfiguring a band corresponding to a channel of the terminal device, reduces a processing delay of the terminal device, and improves data transmission performance. In addition, the terminal device may further report a switching delay needed for the switching between the states, so that the network device can determine the scheduled uplink data.

According to a fifth aspect, a communication method is provided. The method may be performed by a network device (for example, a base station), or may be performed by a component (for example, a chip or a circuit) of the network device. This is not limited herein.

For beneficial effects corresponding to a technical solution on a network side and beneficial effects corresponding to an apparatus, refer to descriptions of beneficial effects on a terminal side. Details are not described herein again.

The method includes: The network device determines first information, where the first information includes N information blocks, a j^{th} information block in the N information blocks includes a first field, the first field indicates a band and/or a carrier after switching of a terminal device, the j^{th} information block is associated with a band and/or a carrier before the switching of the terminal device, and N is a positive integer. The network device sends the first information to the terminal device.

In a possible implementation, the j^{th} information block further includes a second field, the second field indicates a time offset between the first information and the uplink data scheduled by the first information, and the uplink data is transmitted in the band and/or the carrier after the switching.

In a possible implementation, the method further includes: The network device receives sixth information from the terminal device, where the sixth information is used by the network device to determine the first information, where the sixth information includes a correspondence between at least one channel of the terminal device and a band, and the band is a band supported by the at least one channel; the sixth information includes at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group; the sixth information includes at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or the sixth information includes at least a switching correspondence that is between bands and that is in a case of switching of the terminal device from at least one first band to at least one second band.

According to a sixth aspect, a communication method is provided. The method may be performed by a network device (for example, a base station), or may be performed by a component (for example, a chip or a circuit) of the network device. This is not limited herein.

The method includes: The network device determines second information, where the second information includes M information blocks, a k^{th} information block in the M information blocks is associated with a band pair of a terminal device, the band pair includes a band before switching of the terminal device and a band after the switching of the terminal device, and M is a positive integer. The network device sends the second information to the terminal device.

In a possible implementation, the k^{th} information block further includes a third field, and the third field indicates a carrier after the switching of the terminal device.

In a possible implementation, the k^{th} information block includes a second field, the second field indicates a time offset between the second information and uplink data scheduled by the second information, and the uplink data is transmitted in the band or the carrier after the switching.

In a possible implementation, the method further includes: The network device receives sixth information from the terminal device, where the sixth information is used by the network device to determine the second information, where the sixth information includes a correspondence between at least one channel of the terminal device and a band, and the band is a band supported by the at least one channel; the sixth information includes at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group; the sixth information includes at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or the sixth information includes at least a switching correspondence that is between bands and that is in a case of switching of the terminal device from at least one first band to at least one second band.

According to a seventh aspect, a communication method is provided. The method may be performed by a network device (for example, a base station), or may be performed by a component (for example, a chip or a circuit) of the network device. This is not limited herein.

The method includes: The network device determines third information, where the third information includes a first field, the first field indicates a band and/or a carrier after switching of a terminal device, and a band and/or a carrier before the switching are/is determined by the terminal device according to a preset rule, or the band and/or the carrier before the switching are/is indicated by the network device. The network device sends the third information to the terminal device.

In a possible implementation, the third information further includes a second field, the second field indicates a time offset between the third information and uplink data scheduled by the third information, and the data is transmitted in the band and/or the carrier after the switching.

In a possible implementation, the third information further includes a fourth field, and the fourth field indicates a second table in which the time offset is located, or the fourth field indicates an index or a location of the time offset in a first table.

In a possible implementation, the method further includes: The network device receives sixth information from the terminal device, where the sixth information is used by the network device to determine the third information, where the sixth information includes a correspondence between at least one channel of the terminal device and a band, and the band is a band supported by the at least one channel; the sixth information includes at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group; the sixth information includes at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or the sixth information includes at least a switching correspondence that is between bands and that is in a case of switching of the terminal device from at least one first band to at least one second band.

According to an eighth aspect, a communication method is provided. The method may be performed by a network device (for example, a base station), or may be performed by a component (for example, a chip or a circuit) of the network device. This is not limited herein.

The method includes: The network device determines fourth information, where the fourth information includes a fifth field, and the fifth field indicates a first band after switching of a terminal device; and the fourth information further includes a sixth field, the sixth field indicates the terminal device to receive fifth information, and the fifth information indicates a second band after the switching of the terminal device. Alternatively, the fourth information further includes a seventh field, and the seventh field indicates lag time for the fifth field to take effect. The terminal device receives the fifth information in this time period, where the fifth information indicates the second band after the switching of the terminal device. The network device sends the fourth information and the fifth information to the terminal device.

In a possible implementation, the network device receives sixth information from the terminal device, where the sixth information is used by the network device to determine the fourth information, where the sixth information includes a correspondence between at least one channel of the terminal device and a band, and the band is a band supported by the at least one channel; the sixth information includes at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group; the sixth information includes at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or the sixth information includes at least a switching correspondence that is between bands and that is in a case of switching of the terminal device from at least one first band to at least one second band.

According to a ninth aspect, a communication apparatus is provided. The apparatus is configured to perform the method in any one of the possible implementations of the first aspect to the fourth aspect. Specifically, the apparatus may include units and/or modules, for example, a transceiver unit and/or a processing unit, configured to perform the method according to any one of the possible implementations of the first aspect to the fourth aspect.

In an implementation, the apparatus is a terminal device. When the apparatus is a communication device, a communication unit may be a transceiver or an input/output interface. The processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in the communication device, the communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to a tenth aspect, a communication apparatus is provided. The apparatus is configured to perform the method in any one of the possible implementations of the fifth aspect to the eighth aspect. Specifically, the apparatus may include units and/or modules, for example, a transceiver unit and/or a processing unit, configured to perform the method according to any one of the possible implementations of the fifth aspect to the eighth aspect.

In an implementation, the apparatus is a network device. When the apparatus is a communication device, a communication unit may be a transceiver or an input/output interface. The processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is the chip, the chip system, or the circuit used in the communication device, the communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to an eleventh aspect, a communication apparatus is provided. The apparatus includes: at least one processor, configured to execute a computer program or instructions stored in a memory, to perform the method in any one of the possible implementations of any one of the first aspect to the fourth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal device.

In another implementation, the apparatus is a chip, a chip system, or a circuit used in a terminal device.

According to a twelfth aspect, a communication apparatus is provided. The apparatus includes: at least one processor, configured to execute a computer program or instructions stored in a memory, to perform the method in any one of the possible implementations of the fifth aspect to the eighth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network device.

In another implementation, the apparatus is a chip, a chip system, or a circuit used in a network device.

According to a thirteenth aspect, this application provides a processor, including: an input circuit, an output circuit, and a processing circuit. The processing circuit is configured to: receive a signal through the input circuit, and transmit a signal through the output circuit, so that the processor performs the method in any one of the possible implementations of any one of the first aspect to the eighth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in embodiments of this application.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a fourteenth aspect, a processing device is provided, including a processor and a memory. The processor is configured to: read instructions stored in the memory, receive a signal through a transceiver, and transmit a signal through a transmitter, to perform the method in any one of the possible implementations of any one of the first aspect to the eighth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device in the fourteenth aspect may be one or more chips. The processor in the processing device may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory. The memory may be integrated into the processor, or may be located outside the processor and exist independently.

According to a fifteenth aspect, a computer-readable storage medium is provided. The computer-readable storage medium stores program code to be executed by a device, and the program code is used to perform the method in any one of the possible implementations of the first aspect to the eighth aspect.

According to a sixteenth aspect, a computer program product including instructions is provided. When the computer program product runs on a computer, the computer is enabled to perform the method in any one of the possible implementations of the first aspect to the eighth aspect.

According to a seventeenth aspect, a chip system is provided, including a processor, configured to: invoke a computer program from a memory and run the computer program, so that a device on which the chip system is installed performs the method in any one of the implementations of the first aspect to the eighth aspect.

According to an eighteenth aspect, a communication system is provided. The communication system includes the terminal device and the network device. The terminal device is configured to perform the method in any one of the first aspect to the fourth aspect, and the network device is configured to perform the method in any one of the fifth aspect to the eighth aspect.

### BRIEF DESCRIPTION OF DRAWINGS

FIG. 1 is a diagram of a scenario to which this application is applicable;
FIG. 2 is a schematic flowchart of a communication method 200 according to this application;
FIG. 3 is a diagram of information blocks in first information according to this application;
FIG. 4 is a diagram of information blocks in second information according to this application;
FIG. 5 is a diagram of third information according to this application;
FIG. 6 is a block diagram of a communication apparatus 100 according to this application; and
FIG. 7 is a block diagram of a communication apparatus 200 according to this application.

### DESCRIPTION OF EMBODIMENTS

The following describes technical solutions of embodiments of this application with reference to the accompanying drawings.

A wireless communication system to which embodiments of this application may be applied includes but is not limited to a global system for mobile communications (global system for mobile communication, GSM) system, a long term evolution (long term evolution, LTE) frequency division duplex (frequency division duplex, FDD) system, an LTE time division duplex (time division duplex, TDD) system, an LTE system, a long term evolution-advanced (LTE-Advanced, LTE-A) system, a next-generation communication system (for example, a 6G communication system), a convergent system of a plurality of access systems, or an evolved system.

The technical solutions provided in this application may be further applied to machine type communication (machine type communication, MTC), long term evolution-machine type communication (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, the internet of vehicles. Communication manners in an internet of vehicles system are collectively referred to as vehicle-to-X (vehicle-to-X, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

A terminal device in embodiments of this application may include various access terminals, mobile devices, user terminals, or user apparatuses that have a wireless communication function. For example, the terminal device may be user equipment (user equipment, UE), like a mobile phone (mobile phone), a tablet computer (pad), a computer with a wireless transceiver function, a virtual reality (virtual reality, VR) terminal device, or an augmented reality (augmented reality, AR) terminal device. The terminal device may alternatively be a wireless terminal in industrial control (industrial control), a machine type communication (machine type communication, MTC) terminal, customer premises equipment (customer premises equipment, CPE), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, a terminal device in a future evolved public land mobile network (public land mobile network, PLMN), or the like.

A network device (for example, a radio access network device) in embodiments of this application may be an access device through which the terminal device accesses the mobile communication system in a wireless manner. The radio access network device may be: a base station, an evolved NodeB (evolved NodeB, eNB), a home base station, an access point (access point, AP) in a wireless fidelity (wireless fidelity, Wi-Fi) system, a wireless relay node, a wireless backhaul node, a transmission point (transmission point, TP) or a transmission reception point (transmission reception point, TRP), a macro base station or a micro base station, a high frequency base station, or the like. Alternatively, the radio access network device may be a next generation NodeB (next generation NodeB, gNB) in an NR system, or may be a component or some devices included in a base station, for example, a central unit (central unit, CU), a distributed unit (distributed unit, DU), or a baseband unit (baseband unit, BBU). It should be understood that a specific technology and a specific device form used for the radio access network device are not limited in embodiments of this application. In this application, the radio access network device is briefly referred to as a network device. Unless otherwise specified, in this application, all network devices are radio access network devices. In this application, the network device may be the network device itself, or may be a chip used in the network device to complete a wireless communication processing function.

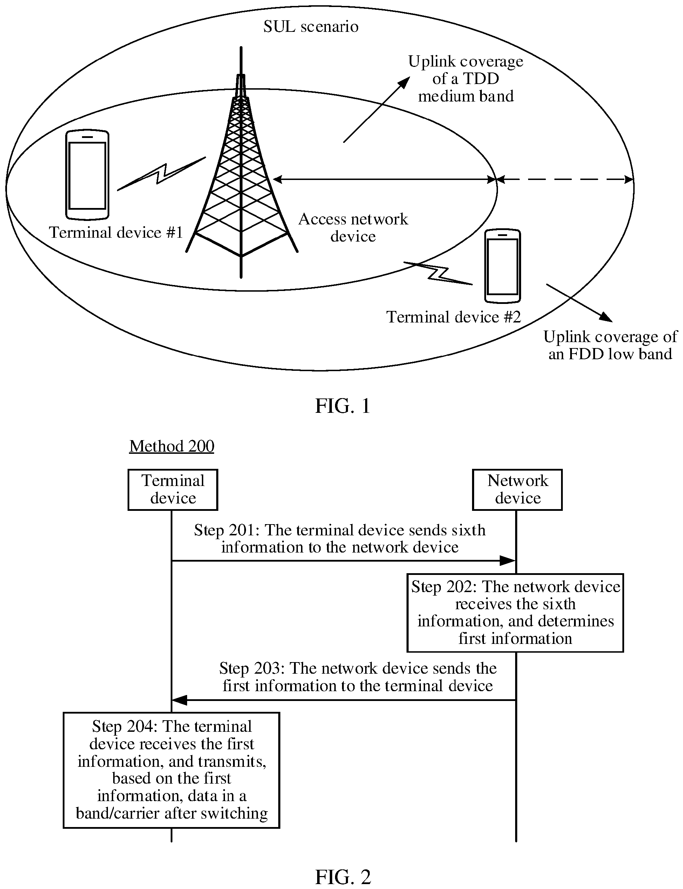

It should be understood that a scenario shown in FIG. 1 is merely an example of a scenario in which a technical solution of this application is used. This application does not exclude a case that a terminal device also needs to be switched between a plurality of frequency bands in another scenario. That is, the technical solutions of this application may be applied to a scenario in which various terminal devices need to be switched between a plurality of frequency bands.

In a 5G new radio (new radio, NR) system, a network device (for example, a base station) may transmit a radio wave to a very long distance by using a large transmit power. However, a transmit power of the terminal device is very small, and uplink coverage is limited. Therefore, received signal strength of an uplink transmitted signal arriving at the network device may be insufficient to ensure coverage performance of the uplink transmitted signal. In addition, an uplink spectrum may be further insufficient. Therefore, it is impossible to rely on retransmission of data to ensure uplink coverage performance of the uplink transmitted signal.

FIG. 1 is a diagram of a scenario to which a technical solution of this application is applicable. As shown in FIG. 1, currently, a supplementary uplink (supplementary uplink, SUL) is introduced in NR as an alternative when uplink coverage is insufficient in an NR system. Because a long term evolution (long term evolution, LTE) low frequency band usually has better coverage performance, it is considered that, for the SUL, a carrier is used for NR uplink transmission from an LTE lower frequency band (for example, 700 MHz, 1.8 GHz, or 2.1 GHz). Currently, it is determined that when performing NR transmission by using an LTE frequency band, a terminal device may reuse the frequency band with LTE uplink time division duplex (time division duplex, TDD). To be specific, when the terminal device is in coverage of a TDD medium frequency band (2.6 GHz, 3.5 GHz, or 4.9 GHz), the terminal device uses the TDD medium frequency band; or when the terminal device moves out of coverage of a TDD medium frequency band (2.6 GHz, 3.5 GHz, or 4.9 GHz), the terminal device may use the LTE low frequency band in an uplink. This supplements weakness of uplink coverage of the TDD medium frequency band, and extends uplink coverage. Certainly, with future evolution, the terminal device may also use another frequency band in the uplink as a supplementary uplink, to further extend the uplink coverage.

It may also be understood as that when transmitting uplink data in an NR frequency band (band) (for example, 2.6 GHz), the terminal device may use a carrier for NR uplink transmission from the LTE low frequency band (for example, 700 MHz/800 MHz/900 MHz, 1.8 GHz, or 2.1 GHz). The carrier may be understood as an SUL frequency band. That is, in this SUL scenario, it is expected that the terminal device may be dynamically switched between a plurality of frequency bands such as 700M/800M/900M, 1.8G, 2.1G, 3.5 GHz, and 4.9 GHz based on a channel status or a load status of a corresponding frequency band.

To help understand the technical solutions of this application, the following briefly describes several technical terms used in this application.

Switching delay of a phase-locked loop (phase-locked loop, PLL): Usually, it takes about 300 microseconds to re-lock a phase-locked loop to a frequency band. Specifically, if a phase-locked loop of a frequency band is closed, such a switching delay is needed to relock the phase-locked loop to another frequency band, or open a new phase-locked loop.

A transmit channel (transmitter, TX): may be referred to as a "radio frequency (radio frequency, RF) transmit channel", which may also be briefly referred to as a "transmit channel". In this application, the transmit channel may operate in, but not limited to, the following manner: The transmit channel may receive a baseband signal from a baseband chip, perform radio frequency processing (such as up-conversion, amplification, and filtering) on the baseband signal to obtain a radio frequency signal, and finally radiate the radio frequency signal to space through an antenna. For example, the transmit channel may include electronic devices such as an antenna switch, an antenna tuner, a low noise amplifier (low noise amplifier, LNA), a power amplifier (power amplifier, PA), a mixer (mixer), a local oscillator (local oscillator, LO), and a filter (filter). These electronic devices may be integrated into one or more chips based on a requirement. The antenna may also be sometimes considered as a part of the transmit channel.

A "channel" mentioned in the following embodiments of this application may also be understood as a "radio frequency chain". The radio frequency chain in this application may also be replaced with a Tx, an antenna, a radio frequency, a transmit channel, a transmit port, a receive channel, or any combination thereof. Details are not described below again.

It should be understood that a "band" (band) mentioned in embodiments of this application may also be understood as a "frequency band", a "frequency", or a "spectrum". Alternatively, the "frequency band" in this application may be understood as a component carrier (component carrier, CC) (which may also be briefly referred to as a "carrier"), that is, the technical solutions in this application are also completely applicable to the "carrier". In the following embodiments of this application, the "band" is mainly used as an example for description.

In this application, sending of a radio frequency chain may also be understood as "sending", "can send", "transmission", or "can transmit". Correspondingly, a quantity of sent radio frequency chains may be understood as "a sent quantity", "a quantity that can be sent", "a transmitted quantity", or "a quantity that can be transmitted". The quantity of sent radio frequency chains may also be understood as "a quantity of layers", "a quantity of antenna layers", or "a quantity of channels".

"Switching" (switch) mentioned in embodiments of this application may also be understood as "conversion"; a "switching delay" mentioned in embodiments of this application may also be understood as a "carrier switching delay", a "carrier conversion delay", a "carrier conversion periodicity (period or interval)", or a " conversion gap (gap)"; and the "switching delay" mentioned in embodiments of this application may also be referred to as "switching time (switching time) in carrier switching preparation time" or "switching time (switching time) in a switching preparation advance". Correspondingly, when performing uplink scheduling, the network device performs corresponding scheduling processing based on the switching delay. Specifically, it may be understood as that N2 is set (where N2 may be understood as an uplink processing delay or an uplink preparation delay). Details are not described below again.

Bands supported by channels of the terminal device are not completely the same. For example, a channel #1 may support a band #A and a band #C, and a channel #2 may support the band #A and a band #B. When the terminal device is switched between states, the following scenario may occur: For example, a state in which the terminal device sends a radio frequency chain in a slot #1 is a state #1 (for example, the state #1 is that a band #A is used on a channel #1, and a band #2 is used on a channel #2), and two pieces of downlink control information (downlink control information, DCI) may be received in a slot #2, indicating bands used when the terminal device is switched to a state #2. For example, DCI #1 indicates to use the band #A, and DCI #2 indicates to use a band #C. The terminal device cannot simultaneously process the two pieces of downlink control information. Therefore, for example, the terminal device may first process the 1^{st} piece of downlink control information, and then process the 2^{nd} piece of control information. In this case, the terminal device may determine, by default with reference to the state #1 before the switching, the bands indicated by the corresponding downlink control information. For example, the terminal device still uses the band #A on the channel #1, uses the band #C on the channel #2, and starts to configure a channel parameter. However, the channel #2 of the terminal device may not support the band #C. In this case, the terminal device needs to cancel the previously configured channel parameter, and reconfigure a channel parameter. Therefore, a processing delay of the terminal device is prolonged. It should be understood that the foregoing scenario is merely an example of this application. When the terminal device is switched between states, there are many such scenarios. Examples are not analyzed one by one herein again.

In view of this, this application provides a communication method. A network device indicates a band and/or a carrier before switching of a terminal device and a band and/or a carrier after the switching of the terminal device, so that the terminal device can clearly obtain a specific band/carrier to be interrupted and can be switched to a target frequency band/carrier. This avoids a problem of reconfiguring a band corresponding to a channel of the terminal device, reduces a processing delay of the terminal device, and improves data transmission performance.

It needs to be noted that "association", "corresponding", and "implicitly corresponding" mentioned in this application may be replaced with each other. "According to" mentioned in this application may be understood as "based on".

A "correspondence", an "association relationship", and the like mentioned in this application may be configured by the network device for the terminal device by using radio resource control (radio resource control, RRC) signaling, or may be a predefined rule.

FIG. 2 shows a communication method 200 according to this application. In the method 200, steps in a specific embodiment of a technical solution of this application are illustrated from a perspective of interaction between a terminal device and a network device. The following describes the steps shown in FIG. 2.

Step 201: The terminal device sends sixth information to the network device.

In a possible implementation, the sixth information may include a correspondence between channels of the terminal device and bands, and the bands are bands supported by the channels. For example, each channel supports transmission in two bands. For another example, each channel supports transmission in three bands. A quantity of channels is not limited in this application, and a quantity of bands supported by each channel is not limited either.

In an example, the terminal device may report that a channel #1 supports a band #A and a band #C, and a channel #2 supports the band #A and a band #B. For another example, the terminal device may report that a channel #1 supports a band #A and a band #D, a channel #2 supports the band #A and a band #B, a channel #3 supports the band #B and a band #C, and a channel #4 supports the band #A and the band #C.

In this application, the bands supported by each channel may be understood as that each channel supports data transmission in the bands.

In another possible implementation, the sixth information includes a switching correspondence between bands when the terminal device is switched between states (for example, a first state and a second state). For example, the first state is that the terminal device supports a first quantity of sent radio frequency chains in a band of a first band group, and the second state is that the terminal device supports a second quantity of sent radio frequency chains in a band of a second band group.

In this application, "the band of the first band group" may also be understood as at least one first band, and "the band of the second band group" may also be understood as at least one second band. In this case, the first state may be understood as that the terminal device supports the first quantity of sent radio frequency chains in the at least one first band, and the second state may be understood as that the terminal device supports the second quantity of sent radio frequency chains in the at least one second band.

It is assumed that a channel #1 of the terminal device supports a band #A and a band #C, and a channel #2 supports the band #A and a band #B. In an example, it is assumed that a state #4 (an example of the first state) is that the terminal device uses the band #A (an example of the first band) to send a radio frequency chain (where the "radio frequency chain" may also be denoted as "Tx") on the channel #1, and uses the band # B (an example of the second band) to send a radio frequency chain on the channel # 2, and the state # 5 (an example of the second state) is that the terminal device uses the band #C (another example of the first band) to send a radio frequency chain on the channel # 1, and uses the band #A (another example of the second band) to send a radio frequency chain on the channel # 2. In this case, the terminal device may report, to the network device, that the terminal device is switched from the band #A to the band #C on the channel #1, and is switched from the band #B to the band #A on the channel #2. An example is shown in Table 1.

**Table 1**

| Band | Sent radio frequency chain state #4 (T_{X} state 4) | Sent radio frequency chain state #5 (T_{X} state 5) |
|---|---|---|
| A | 1 T_{X} (channel #1) | 1 T_{X} (channel #2) |
| B | 1 T_{X} (channel #2) | 0 T_{X} |
| C | 0 T_{X} | 1 T_{X} (channel #1) |

In another example, it is assumed that a state #1 (an example of the first state) is that the terminal uses the band #B on the channel #2 (for example, there are two sent radio frequency chains on the channel #2), and a state #4 (an example of the second state) is that the terminal device uses the band #A on the channel #1 to send a radio frequency chain, and uses the band #B to send a radio frequency chain on the channel #2. In this case, the terminal device may report to the network device that the band #B is switched to the band #B on the channel #2 (in this case, it may also be understood as that the switching is not needed), and the band used on the channel #1 is switched to the band #A (it may be understood as that no radio frequency chain is sent on the channel #1 before the switching). An example is shown in Table 2.

**Table 2**

| Band | Sent radio frequency chain state #1 (T_{X} state 1) | Sent radio frequency chain state #4 (T_{X} state 4) |
|---|---|---|
| A | 0 T_{X} | 1 T_{X} (channel #1) |
| B | 2 T_{X} (channel #2) | 1 T_{X} (channel #2) |
| C | 0 T_{X} | 0 T_{X} |

In still another possible implementation, the sixth information includes a corresponding switching delay when the terminal device is switched between states (for example, a first state and a second state).

In an example, for example, the terminal device may report a switching delay # 1 needed for switching between a state # 4 and a state # 5. The switching delay #1 may be 38 microseconds, 140 microseconds, 210 microseconds, 280 microseconds, 500 microseconds, 1 millisecond, or the like. In another example, the terminal device may report a switching delay #2 needed for switching between a state #1 and a state #5. The switching delay #2 may be 38 microseconds, 140 microseconds, 280 microseconds, 210 microseconds, 280 microseconds, 500 microseconds, 1 millisecond, or the like. When the terminal device reports the switching delay #2 needed for the switching between the state #1 and the state #5, it may also be understood as that a switching correspondence between the state #1 and the state #5 is implicitly indicated, that is, corresponding switching can be performed between the state #1 and the state #5.

In another possible implementation, the sixth information may include a switching correspondence between bands when the terminal device is switched from the at least one first band to at least one second band.

In an example, the terminal device may report that the terminal device is switched from a 1^{st} first band to a 1^{st} second band, and/or is switched from a 2^{nd} first band to a 2^{nd} second band. Refer to Table 1. For example, the terminal device may report that the terminal device is switched from the band #A to the band #C, and is switched from the band #B to the band #A.

In still another possible implementation, the terminal device may alternatively report a switching delay needed for switching from a default state or a fallback state to a new frequency band. In this case, after completing transmission in a current band, the terminal device may further fall back to a frequency band corresponding to the default state/fallback state. For example, the switching delay may be 35 microseconds. That the terminal device falls back to a frequency band corresponding to the default state/fallback state is that a phase-locked loop is locked to the frequency band corresponding to the default state/fallback state. In this application, the default state/fallback state may be predefined, or may be preconfigured by the network device. In this application, the preconfiguration may be understood as that the network device performs configuration by using radio resource control (radio resource control, RRC) signaling.

In another possible implementation, the terminal device may further report that an original state is reserved. To be specific, the terminal device is not switched from a state in which the network device schedules the terminal device to perform transmission to the fallback state, and continues to camp only on a state indicated by a base station.

Step 202: The network device receives the sixth information sent by the terminal device, and determines first information.

For example, the terminal device may determine, based on the sixth information reported by the terminal device, a band and/or a carrier before switching of the terminal device and a band and/or a carrier after the switching. For example, as shown in Table 1, the terminal device may report to the network device that the terminal device is switched from the band #A to the band #C on the channel #1, and is switched from the band #B to the band #A on the channel #2. If a current state is the band #A 1 Tx and the band #B 1 Tx, and a next state is expected to be the band #A 1 Tx and the band #C 1 Tx, the network device may determine that the terminal device needs to interrupt current transmission from the band #B, and performs target transmission to the band #A; and may further determine that the terminal device needs to interrupt the current transmission from the band #A, and performs target transmission to the band #C. Therefore, the band before the switching is the band #B, and the band after the switching is the band #A; and the band before the switching is the band #A, and the band after the switching is the band #C.

For another example, the default state is the band #A. If a time interval between a current state and a next state is greater than or equal to a time length, the terminal device enters the default state. Optionally, the time length may be predefined, for example, duration of two slots (slots) or duration of one slot. If the next state is expected to be the band #A 1 Tx and the band #C 1 Tx, it may be determined that the terminal device needs to reserve 1 Tx from the band #A to perform target 1 Tx transmission, and interrupt 1 Tx to perform target 1 Tx transmission to the band #C.

The first information includes at least one information block (block) (for example, N information blocks, where N is an integer greater than 0), and each information block may be associated with a band and/or a carrier before switching of the terminal device. It may also be understood as that each information block may be implicitly associated with the band and/or the carrier before the switching of the terminal device. A 1^{st} information block may correspond to a lowest band index and/or carrier index, and by analogy, an N^{th} information block may correspond to a highest frequency band index and/or carrier index. For another example, a 1^{st} information block may correspond to a highest band index and/or carrier index, and by analogy, an N^{th} information block may correspond to a lowest band index and/or carrier index.

In this application, the lowest band index and/or carrier index, and the highest band index and/or carrier index may be for bands and/or carriers currently used by the terminal device. For example, if the bands currently used by the terminal device are n28 and n43, the lowest band index is a band index corresponding to the band n28, and the highest band index is a band index corresponding to the band n43. For another example, if the carriers currently used by the terminal device are a serving cell (serving cell) #3 and a serving cell #5, the lowest carrier index is an index 3 corresponding to the carrier serving cell #3, and the highest carrier index is an index 5 corresponding to the carrier serving cell #5.

For example, assuming that the bands currently used by the terminal device are a band #1 and a band #3, a 1^{st} information block may correspond to the band #1 of the terminal, and a 2^{nd} information block may correspond to the band #3. Assuming that the bands currently used by the terminal device are a band #28 and a band #36, for example, a 1^{st} information block may correspond to the band #28, and a 2^{nd} information block may correspond to the band #36.

For example, assuming that the terminal device currently uses a carrier #3 in a band #1 and a carrier #1 in a band #2, a 1^{st} information block may correspond to the carrier #3 in the band #1 by default, and a 2^{nd} information block may correspond to the carrier #1 in the band #2 by default.

For example, in an implementation, an index may be set for all carriers on bands. Assuming that each band may support four carriers, there may be 12 carriers in a band #1 to a band #3. It is assumed that a carrier #1 to a carrier 4 are carriers in a band #1, a carrier #5 to a carrier #8 are carriers in a band #2, and a carrier #9 to a carrier #12 are carriers in a band #4. In this case, a 1^{st} information block may correspond to the carrier #1, a 2^{nd} information block may correspond to the carrier #2, a 3^{rd} information block may correspond to the carrier #3, a 10^{th} information block may correspond to the carrier #10, and the like. It may also be understood as that, in this case, the band after the switching may alternatively be implicitly indicated by using a correspondence between the information block and the carrier.

For example, each information block may alternatively correspond to one carrier set. The carrier set may be understood as that 32 carriers are divided into P sets or groups (where P is an integer greater than 0), and each information block corresponds to an index (index) of one carrier set or an index of one carrier group.

Specifically, a person skilled in the art may design, based on an actual situation, a band and/or a carrier associated with each information block. This is not limited in this application.

The first information may include at least one information block, where each information block includes a field #1 (an example of a first field), and the field #1 indicates a band and/or a carrier after switching.

In an implementation, the field #1 includes a 1-bit first indication, and the 1-bit first indication indicates whether to trigger switching from a current band and/or carrier (indication on whether switch this band/CC). The field #1 may further include a second indication (where the second indication, for example, may occupy three bits), and the second indication indicates a band and/or a carrier after the switching (switch to band/CC). For example, the second indication may indicate a band index of the band after the switching (switch to band index/CC index). For example, the second indication may indicate that the band after the switching is a band #3. For another example, the second indication may indicate a carrier of a band after switching (for example, a carrier #1 of a band #4). For still another example, the second indication may indicate a carrier after switching. For example, the carrier after the switching is a carrier #11 (as described above, in this case, it may be implicitly indicated that the band after the switching is the band #3).

Optionally, each information block may further include a field #2 (an example of a second field), indicating a time offset between the first information and uplink data scheduled by using the first information. Alternatively, it may be understood as that the field #2 may indicate K2' or K1'. For example, the network device may determine scheduling of uplink data (for example, determine K2') for the terminal device based on the switching delay between the states reported by the terminal device, so that after completing the switching between the states, the terminal device receives the data in a specific slot or symbol based on the indication of the field #2. This can avoid that the terminal device receives the data before completing the switching between the states, so that data transmission performance is improved.

In this application, the "time offset" may alternatively be a "slot offset" or a "symbol offset", or may be the "slot offset" and the "symbol offset".

K2 is a delay (which may also be referred to as data processing time or data preparation time) for scheduling transmission of the uplink data, and K1 is a delay from scheduling a physical downlink shared channel (physical downlink shared channel, PDSCH) to feeding back a physical uplink control channel (physical uplink control channel, PUCCH). Specifically, for descriptions of K2, refer to the technical specification (technical specification, TS) 38.214 in the 3rd generation mobile communication partners project (the 3rd generation partner project, 3GPP) for understanding, and for descriptions of K1, refer to the technical specification TS 38.213 in the 3GPP. Details are not specifically described in this application.

In this application, K2' may be, for example, the existing K2 plus lock time of a phase-locked loop. Similarly, K1' may be, for example, the existing K1 plus the lock time of the phase-locked loop. For example, K2' is greater than or equal to time of three slots or time of four slots.

In an example, a table may be separately defined for K2' (for example, a K2 table in an existing protocol is denoted as a "first table", and a K2' table in this application may be denoted as a "second table"). K2' is different from a value listed in the existing K2 table. When the network device indicates K2' to the terminal device, a table index indication and an indication of a value of K2' are needed. It may also be understood as that in this case, the second table needs to be indicated. In another example, a value of K2' may be additionally added based on a current K2 table. For example, bit extension may be performed. In this case, no table index indication is needed.

Optionally, each information block further includes at least one of modulation and coding scheme offset (MCS offset) information, transmit power control (transmit power control, TPC) information, and other scheduling information, indicating a transmission rate of the terminal device in a band/carrier after switching. For example, the network device may indicate, with reference to MCS information or TPC information in a current band/carrier, MCS information or TPC information in a target band/carrier after switching.

Optionally, the first information may not include any scheduling information (such as the MCS offset information and the TPC information). In this case, scheduling DCI for the target band/carrier needs to be jointly used. To be specific, the transmission of the uplink data in the target band/carrier can be completed only after the first information is jointly used with the DCI for scheduling transmission of the uplink data in the target band/carrier. It may also be understood as that in this case, the first information only indicates a specific band/carrier in which transmission is to be interrupted by the switching and the band/carrier after the switching, and is not used for scheduling indication.

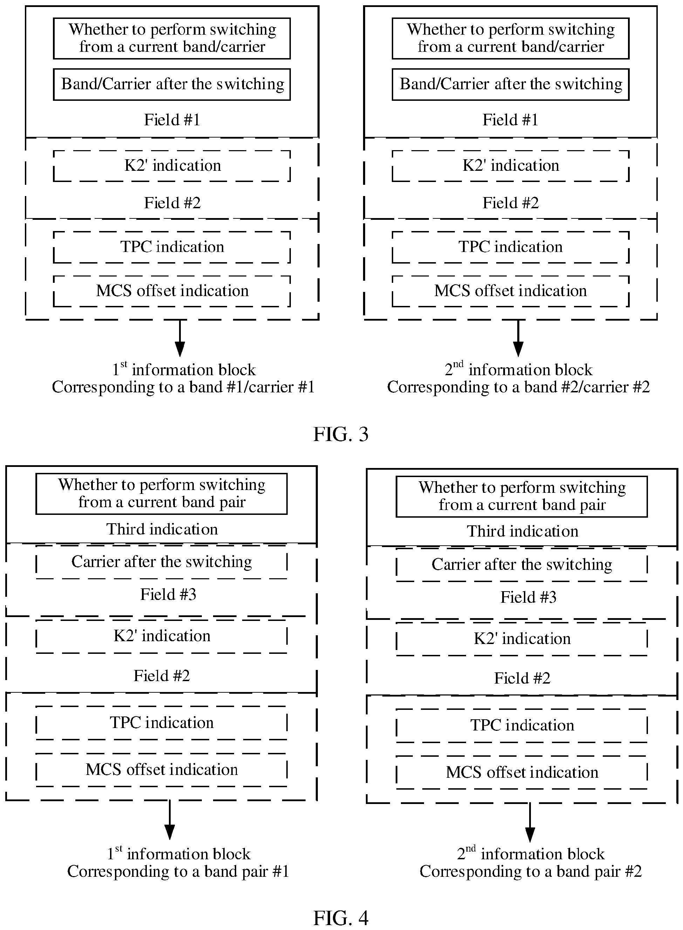

As shown in FIG. 3, each information block may correspond to a band and/or a carrier locked or camped on by a current phase-locked loop. For example, information blocks may sequentially correspond to numbers (where the "numbers" may also be understood as "indexes") of bands and/or carriers in ascending order, or may sequentially correspond to numbers of bands/carriers in descending order (where fields shown by dashed lines in FIG. 3 are optional).

For example, the first information may be group common downlink control information (group common DCI) (to be specific, in this case, one or more terminals may determine a band/carrier after switching based on the DCI), and redundancy check (cyclic redundancy check, CRC) of the DCI is scrambled by using a new physical uplink shared channel-switch-radio network temporary identifier (PUSCH-switch-RNTI). The new physical uplink shared channel-switch-radio network temporary identifier is configured by a network device by using RRC signaling. In this case, the first information does not need to indicate the second table. This is because the new RNTI is used for the scrambling, and the terminal device may determine, by default by parsing the RNTI, that a delay included in the first information is a delay in the second table.

Step 203: The network device sends the first information to the terminal device.

For example, the network device may send the group common DCI to the terminal device.

Step 204: The terminal device receives the first information sent by the network device, and transmits, based on the first information, the uplink data in the band/carrier after the switching.

In an example, it is assumed that the terminal device currently uses a band #18 on a channel #1, and uses a band #20 on a channel #2, to transmit uplink data. The first information received by the terminal device includes two information blocks, a 1^{st} information block corresponds to the band #18, and a 2^{nd} information block corresponds to the band #20. The 1^{st} information block includes a field #1, a first indication in the field #1 indicates that switching is performed from a current band (that is, "indication on whether switch this band" is "1"), and a second indication in the field #1 indicates that a band after the switching is a band #16. Similarly, the 2^{nd} information block also includes a field #1, a first indication in the field #1 indicates that switching is performed from a current band, and a second indication in the field #1 indicates that a band after the switching is the band #18. That is, the terminal device may be switched from the band #18 and the band #20 (for example, a fourth state) to the band #16 and the band #18 (for example, a fifth state).

In another example, it is assumed that the terminal device currently uses a carrier #12 (for example, implicitly corresponding to a band #3) on a channel #1, and uses a carrier #25 (for example, implicitly corresponding to a band #7) on a channel #2, to transmit uplink data. The first information received by the terminal device includes two information blocks, a 1^{st} information block corresponds to the carrier #12, and a 2^{nd} information block corresponds to the carrier #25. The 1^{st} information block includes a field #1, a first indication in the field #1 indicates that switching is performed from a current carrier (that is, "indication on whether switch CC" is "1"), and a second indication in the field #1 indicates that a carrier after the switching is a band #13 (for example, implicitly corresponding to a band #4). Similarly, the 2^{nd} information block also includes a field #1, a first indication in the field #1 indicates that switching is performed from a current carrier, and a second indication in the field #1 indicates that a carrier after the switching is a carrier #10 (for example, implicitly corresponding to a band #3). That is, the terminal device may be switched from the carrier #12 and the carrier #25 (for example, a fourth state) to the carrier #13 and the carrier #10 (for example, a fifth state).

In this application, the terminal device may determine, by using the first information, a specific band and/or carrier to be interrupted and a band and/or carrier after switching. This avoids a problem of reconfiguring a band corresponding to a channel of the terminal device, and reduces a delay.

Optionally, if the first information further includes a field #2, for example, the terminal device currently receives the first information in a slot #1, the field #2 may indicate the terminal device to send data on a third symbol in a second slot, in other words, the terminal device may start to use the band #16 and the band #18 to send data from a third symbol in the slot #2.

In this application, the terminal device may determine, by using the first information, a specific slot in which or a specific symbol on which the uplink data is sent by using a band/carrier after switching, so that after completing the switching between the states, the terminal device receives the data in the specific slot based on the indication of the field #2. This can avoid that the terminal device receives the data before completing the switching between the states, so that data transmission performance is improved.

This application further provides another communication method 300. In the method 300, steps in a specific embodiment of a technical solution of this application are illustrated from a perspective of interaction between a terminal device and a network device. The steps in the method 300 are similar to the steps in the method 200. For a specific schematic flowchart, refer to FIG. 2 for understanding. Details are not shown again. The following describes the steps in the method 300.

Step 301: The terminal device sends sixth information to the network device.

In a possible implementation, the sixth information may include a correspondence between channels of the terminal device and bands, and the bands are bands supported by the channels.

In another possible implementation, the sixth information includes a switching correspondence between bands when the terminal device is switched between states (for example, a first state and a second state).

In another possible implementation, the sixth information may include a switching correspondence between bands when the terminal device is switched from the at least one first band to at least one second band.

In still another possible implementation, the sixth information includes a corresponding switching delay when the terminal device is switched between states (for example, a first state and a second state).

In still another possible implementation, the terminal device may alternatively report a switching delay needed for switching from a default state or a fallback state to a new frequency band.

In another possible implementation, the terminal device may further report that an original state is reserved. To be specific, the terminal device is not switched from a state in which the network device schedules the terminal device to perform transmission to the fallback state, and continues to camp only on a state indicated by a base station.

For details, refer to descriptions in step 201 in the method 200 for understanding. Details are not described herein again.

Step 302: The network device receives the sixth information sent by the terminal device, and determines second information based on the sixth information.

In this embodiment, the second information includes at least one information block (for example, M information blocks, where M is an integer greater than 0). Each information block is related to a band pair (band pair) of the terminal device, and the band pair includes a band before switching of the terminal device and a band after the switching of the terminal device. The "band pair" may be understood as {the band before the switching (switch from band) - the band after the switching (switch to band)}. It may also be understood as that each information block is implicitly associated with the band before the switching of the terminal device and the band after the switching of the terminal device.

In an example, a 1^{st} information block may correspond to a band pair #1, a 2^{nd} information block may correspond to a band pair #2, and a 3^{rd} information block may correspond to a band pair #3. Assuming that the terminal device supports data transmission in three bands (for example, a band #A, a band #B, and a band #C), there may be 3 x 2 = 6 band pairs. Assuming that the terminal device supports data transmission in four bands (for example, a band #A, a band #B, a band #C, and a band #D), there may be 4 x 3 = 12 band pairs. For example, Table 3 shows a case of band pairs when the terminal device supports three bands. To be specific, in this embodiment, each information block may implicitly correspond to a band before switching and a band after the switching, and the terminal device may obtain, based on each information block, a specific band to be interrupted and the band after the switching. Table 3 may be configured by the network device by using RRC signaling, or may be predefined.

**Table 3**

| Band pair index (band pair index) | Band before switching (switch form band) | Band after the switching (switch to band) |
|---|---|---|
| 1 | A | B |
| 2 | A | C |
| 3 | B | A |
| 4 | B | C |
| 5 | C | A |
| 6 | C | B |

In an implementation, each information block includes a 1-bit third indication, and the 1-bit third indication indicates whether to trigger switching from a current band pair (indication on whether switch this band pair).

Optionally, each information block may further include a field #3 (an example of a third field), and the field #3 indicates a carrier after switching. For example, an index of the carrier after the switching (for example, switch to CC index) may be indicated.

For example, the 1^{st} information block corresponds to the band pair #1, and the field #3 may further indicate that the carrier after the switching is a carrier #1 in the band #B. For another example, the 2^{nd} information block corresponds to the band pair #2, and the field #3 in the 2^{nd} information block may further indicate that the carrier after the switching is a carrier #4 in the band #C.

Optionally, each information block may further include a field #2 (an example of a second field), indicating a time offset between the first information and uplink data scheduled by using the first information. Specifically, for understandings of the field #2, refer to descriptions in step 202 in the method 200. Details are not described herein again.

Optionally, each information block further includes at least one of modulation and coding scheme offset (MCS offset) information, transmit power control (transmit power control, TPC) information, and other scheduling information, indicating a transmission rate of the terminal device in a band/carrier after switching. For example, the network device may indicate, with reference to MCS information or TPC information in a current band/carrier, MCS information or TPC information in a target band/carrier after switching.

Optionally, each information block may not include any scheduling information (such as the MCS offset information and the TPC information). In this case, scheduling DCI for the target band/carrier needs to be jointly used. To be specific, the transmission of the uplink data in the target band/carrier can be completed only after the second information is jointly used with the DCI for scheduling transmission of the uplink data in the target band/carrier. It may also be understood as that in this case, the second information only indicates a specific band/carrier in which transmission is to be interrupted by the switching and the band/carrier, and is not used for scheduling indication.

As shown in FIG. 4, each information block may correspond to one band pair. For example, information blocks may sequentially correspond to numbers (where the "numbers" may also be understood as "indexes") of band pairs in ascending order, or may sequentially correspond to numbers of band pairs in descending order.

For example, the second information may be group common downlink control information (group common DCI), and CRC of the DCI may be scrambled by using a new physical uplink shared channel-switch-radio network temporary identifier (PUSCH-switch-RNTI). In this case, the second information does not need to indicate the second table. This is because the new RNTI is used for the scrambling, and the terminal device may determine, by default by parsing the RNTI, that a delay included in the second information is a delay in the second table.

Step 303: The network device sends the second information to the terminal device.

For example, the network device may send the group common DCI to the terminal device.

Step 304: The terminal device receives the second information sent by the network device, and transmits, based on the second information, the uplink data in the band after the switching.

In an example, it is assumed that the terminal device currently uses a band #18 on a channel #1, and uses a band #20 on a channel #2. The terminal device receives the second information, where the second information includes two information blocks, and a 1^{st} information block corresponds to a band pair #1. It is assumed that the band pair #1 indicates that a band before switching is the band #18, and a band after the switching is a band #16. For example, if a 1-bit third indication in the 1^{st} information block (indication on whether switch this band pair) is 1, the terminal device determines to be switched from the band #18 to the band #16. Similarly, a 2^{nd} information block corresponds to a band pair #2, and the band pair #2 indicates that a band before switching is a band #20, and a band after the switching is the band #18. If a 1-bit third indication in the 2^{nd} information block (indication on whether switch this band pair) is 1, the terminal device determines to be switched from the band #20 to the band #18. That is, the terminal device may be switched from the band #18 and the band #20 (for example, a fourth state) to the band #16 and the band #18 (for example, a fifth state).

Further, if the 1^{st} information block further includes the field #3, the field #3 indicates that the carrier after the switching of the terminal device is a carrier #1. That is, the terminal device may determine to transmit the uplink data in the carrier #1 in the band #16 after the switching. For another example, if the 2^{nd} information block includes the field #3, the field #3 indicates that the carrier after the switching of the terminal device is a carrier #3. That is, the terminal device may determine to transmit the uplink data in the carrier #3 in the band #18 after the switching.

In this application, the terminal device may determine, by using the second information, a specific band to be interrupted and a band or carrier after switching. This avoids a problem of reconfiguring a band corresponding to a channel of the terminal device, and reduces a delay.

Optionally, if the second information further includes a field #2, for example, the terminal device currently receives the first information in a slot #1, the field #2 may indicate the terminal device to send data on a third symbol in a second slot, in other words, the terminal device may start to use the band #16 and the band #18 to send data from a third symbol in the slot #2.

In this application, the terminal device may determine, by using the second information, a specific slot in which or a specific symbol on which the uplink data is sent by using a band/carrier after switching, so that after completing the switching between the states, the terminal device receives the data in the specific slot based on the indication of the field #2. This can avoid that the terminal device receives the data before completing the switching between the states, so that data transmission performance is improved.

This application further provides another communication method 400. In the method 400, steps in a specific embodiment of a technical solution of this application are illustrated from a perspective of interaction between a terminal device and a network device. The steps in the method 400 are similar to the steps in the method 200. For a specific schematic flowchart, refer to FIG. 2 for understanding. Details are not shown again. The following describes the steps in the method 400.

Step 401: The terminal device sends sixth information to the network device.

In a possible implementation, the sixth information may include a correspondence between channels of the terminal device and bands, and the bands are bands supported by the channels.

In another possible implementation, the sixth information includes a switching correspondence between bands when the terminal device is switched between states (for example, a first state and a second state).

In still another possible implementation, the sixth information includes a corresponding switching delay when the terminal device is switched between states (for example, a first state and a second state).

In another possible implementation, the sixth information may include a switching correspondence between bands when the terminal device is switched from the at least one first band to at least one second band.

In still another possible implementation, the terminal device may alternatively report a switching delay needed for switching from a default state or a fallback state to a new frequency band.

In another possible implementation, the terminal device may further report that an original state is reserved. To be specific, the terminal device is not switched from a state in which the network device schedules the terminal device to perform transmission to the fallback state, and continues to camp only on a state indicated by a base station.

For details, refer to descriptions in step 201 in the method 200 for understanding. Details are not described herein again.

Step 402: The network device receives the sixth information sent by the terminal device, and determines third information based on the sixth information.

In this embodiment, the third information includes a field #1 (an example of a first field), and the field #1 (for example, "switch from band/CC index") indicates a band and/or a carrier after switching of the terminal device. For example, the field #1 indicates that the band after the switching of the terminal device is a band #10. For another example, the field #1 indicates that the carrier of the terminal device after the switching is a carrier #17 (in this case, the band after the switching may be implicitly determined based on the carrier. For a specific understanding, refer to descriptions of step 202 in the method 200). For still another example, the field #1 may explicitly indicate the band after the switching and is implicitly associated with the carrier after the switching. For example, the field #1 indicates that the band after the switching of the terminal device is a band #10, and the associated carrier after the switching is a carrier #4 in the band #10 by default.

In a possible implementation, the third information further includes a field #8 ("switch to band/CC") indicating a band and/or a carrier after switching (for example, the field #8 may indicate the band and/or the carrier after the switching ("switch to band/CC index")). For a specific implementation, refer to the foregoing implementation in which the field #1 indicates the band before the switching of the terminal device. Details are not described herein again.

In another possible implementation, the band and/or the carrier before the switching may be determined by the terminal device according to a preset rule. For example, the preset rule is that transmission is interrupted from bands and/or carriers in which the terminal device is located and based on a corresponding lowest index; or transmission is interrupted from bands and/or carriers in which the terminal device is located and based on a corresponding highest index. For another example, the preset rule is that transmission is interrupted from bands and/or carriers in which the terminal device is located and by sequentially selecting lowest indexes obtained by sorting corresponding indexes in ascending order; or transmission is interrupted from bands and/or carriers in which the terminal device is located and by sequentially selecting highest indexes obtained by sorting corresponding indexes in descending order.

The foregoing "switch from band" may indicate a lower/higher band in currently camped bands by using 0/1, or indicate a band index. For example, an UL/SUL 1 bit or a padding bit (padding bit) may be reused. In the foregoing descriptions, the switch to band index/CC index may also indicate, by using 0/1, a lower/higher band in remaining bands except the currently camped bands in a plurality of configured bands, or indicate a band index/CC index, or an UL/SUL 1 bit or a padding bit may be reused.

Optionally, a correspondence between the switch from band/CC and the switch to band/CC may be configured by using RRC signaling, or may be predefined. For details, refer to Table 3 for understanding. In this case, the third information may indicate a value of an index of the switching correspondence in the configuration.

In a possible implementation, for example, a carrier before switching (for example, switch from CC index) does not need to be explicitly indicated, and may be implicitly obtained by using the band before the switching (switch from band index). For example, it may be specified in advance that the switching is performed from a carrier #2 in a band #1, or the switching is performed from a carrier #1 in a band #2. For example, a carrier after switching (switch to CC index) may be indicated by a carrier indicator field (carrier indicator field, CIF) for cross-carrier scheduling.

Optionally, the third information may further include a field #2 (an example of a second field), indicating a time offset between the first information and uplink data scheduled by using the first information. Specifically, for understandings of the field #2, refer to descriptions in step 202 in the method 200. Details are not described herein again. Further, if the third information includes the field #2, the third information may further include a field #4, indicating a location of the time offset. For example, the field #4 may indicate a second table in which the time offset is located (in other words, a second table may be redesigned for K2'), or the field #4 indicates an index or a location of the time offset in a first table (in this case, bit extension may be performed in an existing K2 table (denoted as a "first table") to indicate K2').

Optionally, the third information further includes at least one of modulation and coding scheme offset (MCS offset) information, transmit power control (transmit power control, TPC) information, and other scheduling information, indicating a transmission rate of the terminal device in a band/carrier after switching. For example, the network device may indicate, with reference to MCS information or TPC information in a current band/carrier, MCS information or TPC information in a target band/carrier after switching.

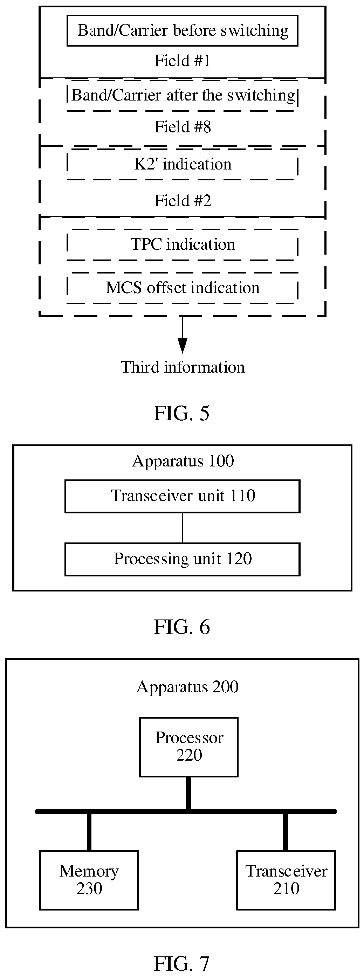

Optionally, the third information may not include any scheduling information (such as the MCS offset information and the TPC information). In this case, scheduling DCI for the target band/carrier needs to be jointly used. To be specific, the transmission of the uplink data in the target band/carrier can be completed only after the second information is jointly used with the DCI for scheduling transmission of the uplink data in the target band/carrier. It may also be understood as that in this case, the second information only indicates a specific band/carrier in which transmission is to be interrupted by the switching and the band/carrier, and is not used for scheduling indication. FIG. 5 shows fields that may be included in third information.

For example, the third information may be dynamically scheduled downlink control information (for example, DCI 0_1), and may be scrambled by using an existing physical uplink shared channel-switch-radio network temporary identifier (PUSCH-switch-RNTI). In this case, the third information needs to indicate a second table. This is because the existing RNTI is used for the scrambling, and a terminal device cannot determine, in a descrambling manner, that a delay included in the third information is a delay in the second table. Therefore, the second table needs to be explicitly indicated.

In this embodiment, the third information block may also include a plurality of information blocks, each information block includes a field #1 (that is, indicating a band and/or a carrier before switching), and each information block may further include a field #8 (that is, indicating a band and/or a carrier after the switching). It may also be understood as that the information block in this embodiment is not implicitly associated with the band and/or the carrier before the switching. Therefore, the band and/or the carrier before the switching and the carrier and/or an index after the switching both need to be explicitly indicated. Optionally, each information block may further include a field #2. Optionally, each information block may further include at least one of modulation and coding scheme offset (MCS offset) information, transmit power control (transmit power control, TPC) information, and other scheduling information. Optionally, each information block does not include any scheduling information. In this case, the third information may be compact downlink control information (compact DCI) (DCI 0_0), and may be scrambled by using a new RNTI.

Step 403: The network device sends the third information to the terminal device.

For example, the network device may send the dynamically scheduled DCI to the terminal device, or the network device sends the compact DCI to the terminal device.

Step 404: The terminal device receives the third information sent by the network device, and transmits, based on the third information, the uplink data in the band after the switching.

In an example, an example in which the third information indicates a band is used (a case in which the third information indicates a carrier may also be understood similarly). For example, the network device may simultaneously deliver two pieces of third information. It is assumed that the terminal device currently uses a band #18 on a channel #1, and uses a band #20 on a channel #2. It is assumed that a 1^{st} piece of third information indicates that the band before the switching is the band #18, the band after the switching is a band #16, a 2^{nd} piece of third information indicates that the band before the switching is the band #20, and the band after the switching is a band #18. In this case, the terminal device is switched from the band on the channel #1 to the band #16 and from the band on the channel #2 to the band #18 based on the indication of the third information. That is, the terminal device may be switched from the band #18 and the band #20 (for example, a fourth state) to the band #16 and the band #18 (for example, a fifth state).

Optionally, if the DCI is scrambled by using the existing RNTI, the third information further includes a location indication of K2', for example, a second table in which K2' is located. The terminal device may determine K2' based on the indication.

In this application, the terminal device may determine, by using the third information, a specific band to be interrupted and a band or carrier after switching. This avoids a problem of reconfiguring a band corresponding to a channel of the terminal device, and reduces a delay.

Optionally, if the second information further includes a field #2, for example, the terminal device currently receives the first information in a slot #1, the field #2 may indicate the terminal device to send data on a third symbol in a second slot, in other words, the terminal device may start to use the band #16 and the band #18 to send uplink data from a third symbol in the slot #2.

In this application, the terminal device may determine, by using the third information, a specific slot in which or a specific symbol on which the uplink data is sent by using a band/carrier after switching, so that after completing the switching between the states, the terminal device receives the data in the specific slot based on the indication of the field #2. This can avoid that the terminal device receives the data before completing the switching between the states, so that data transmission performance is improved.

This application further provides another communication method 500. In the method 500, steps in a specific embodiment of a technical solution of this application are illustrated from a perspective of interaction between a terminal device and a network device. The steps in the method 500 are similar to the steps in the method 200. For a specific schematic flowchart, refer to FIG. 2 for understanding. Details are not shown again. The following describes the steps in the method 500.

Step 501: The terminal device sends sixth information to the network device.

In a possible implementation, the sixth information may include a correspondence between channels of the terminal device and bands, and the bands are bands supported by the channels.

In another possible implementation, the sixth information includes a switching correspondence between bands when the terminal device is switched between states (for example, a first state and a second state).

In still another possible implementation, the sixth information includes a corresponding switching delay when the terminal device is switched between states (for example, a first state and a second state).

In another possible implementation, the sixth information may include a switching correspondence between bands when the terminal device is switched from the at least one first band to at least one second band.

In still another possible implementation, the terminal device may alternatively report a switching delay needed for switching from a default state or a fallback state to a new frequency band.

In another possible implementation, the terminal device may further report that an original state is reserved. To be specific, the terminal device is not switched from a state in which the network device schedules the terminal device to perform transmission to the fallback state, and continues to camp only on a state indicated by a base station.

For details, refer to step 201 in the method 200. Details are not described herein again.

Step 502: The network device receives the sixth information sent by the terminal device, and determines fourth information based on the sixth information.

In this embodiment, the fourth information includes a field #5 (an example of a fifth field), and the field #5 may indicate a first band after switching of the terminal device.

In a possible implementation, the fourth information further includes a field #6 (an example of a sixth field), the field #6 indicates the terminal device to receive fifth information, and the fifth information indicates a second band after the switching of the terminal device.

In an example, the fourth information may be dynamically scheduled DCI, and a new bit may be added to existing DCI 0_1 or DCI 0_0. For example, the new bit occupies one bit. When the new bit is "1", it indicates that another piece of DCI for the same terminal device in this slot needs coordinated scheduling. The "coordinated scheduling" may be understood as that, after the another piece of DCI is parsed, a corresponding channel of a band/CC scheduled by the DCI is determined for transmission, so that the terminal device can configure a corresponding channel parameter based on a complete transmission combination status of a target slot, thereby reducing a reconfiguration problem caused by a channel configuration error. If the new bit is 0, it indicates that no another piece of DCI for the same terminal device in the slot needs coordinated scheduling. Therefore, a corresponding channel parameter may be enabled immediately for configuration.

The terminal device may determine, based on the indication of the fourth information and the indication of the fifth information, a band/carrier before switching and a band/carrier after the switching.

Based on the foregoing technical solution, the fourth information may indicate that there is the another piece of DCI to be detected in the current slot, so that after obtaining a 1^{st} piece of DCI, the terminal device needs to wait for information about a 2^{nd} piece of DCI, and determines, based on the two pieces of DCI, the transmission combination status of the target slot scheduled for transmission. Therefore, the parameter does not need to be configured on a non-corresponding channel, so that a parameter reconfiguration problem is avoided.

In another possible implementation, the fourth information further includes a field #7 (an example of a seventh field), and the field #7 indicates lag time for the field #5 to take effect. The network device may receive fifth information in a time period, and the fifth information indicates a second band after the switching of the terminal device. Optionally, one time period may be a quantity of symbols or a quantity of slots. For example, one time is three symbols or one slot.

In this application, the "lag time" may also be understood as a "time window", a "time period", "switching duration", or a "time offset". For example, in this application, the "lag time" may be, for example, preconfigured by a base station by using RRC signaling.

In an example, the fourth information may be dynamically scheduled DCI. For example, a new bit may be added to existing DCI0_1 or DCI0_0. The new bit indicates a start moment for the DCI to take effect. The effective start moment indicates that a corresponding channel parameter can be configured only from the effective start moment after the DCI is received. For example, the effective start moment may be indicated by using indexes of a plurality of time windows. The time window may also be understood as lag time or switching duration. For example, the time window may be preconfigured by a base station by using RRC signaling. For example, the network device may send fifth information to the terminal device in the time window.

The terminal device may determine, based on the indication of the fourth information and the indication of the fifth information, a band/carrier before switching and a band/carrier after the switching.

Based on the foregoing technical solution, the network device indicates, by using the fourth information, the start moment at which the channel parameter is configured after the DCI detected in the current slot is parsed, so that after obtaining the 1^{st} piece of DCI, the terminal device may not urgently configure the channel parameter, can obtain the 2^{nd} piece of DCI before the start moment, and comprehensively determine, based on the two pieces of DCI, the transmission combination status of the target slot scheduled for the transmission. Therefore, the parameter does not need to be configured on the non-corresponding channel, so that a parameter reconfiguration problem is avoided.

Step 503: The network device sends the fourth information and the fifth information to the terminal device.

For example, the network device may send the dynamically scheduled fourth information and fifth information to the terminal device.

Step 504: The terminal device receives the fourth information and the fifth information that are sent by the network device, and transmits, based on the fourth information and the fifth information, uplink data in the band/carrier after the switching.

In an example, it is assumed that the terminal device currently uses a band #18 on a channel #1, and uses a band #20 on a channel #2. The terminal device receives the fourth information in a slot #2. The terminal device determines, based on the fourth information, that a band after switching is the band #18, and determines that the fifth information needs to be received in the slot #2. The terminal device needs to determine bands after the switching based on both the fourth information and the fifth information. The terminal device continues to receive the fifth information in the slot #2, where the fifth information indicates that the band after the switching of the terminal device is a band #16. It is assumed that the terminal device supports the band #18 and the band #16 on the channel #1, and supports the band #20 and the band #18 on the channel #2. In this case, the terminal device may determine, based on both the fourth information and the fifth information, that the band #18 needs to be switched to the band #16 on the channel #1 (for example, a fourth state), and the band #20 needs to be switched to the band #18 on the channel #2 (for example, a fifth state).

In another example, it is assumed that the terminal device currently uses a band #18 on a channel #1, and uses a band #20 on a channel #2. The terminal device receives the fourth information on a 1^{st} symbol in a slot #2, determines, based on the fourth information, that a band after switching is the band #18, and determines that a parameter needs to be configured on the channel #1 from a 10^{th} symbol in the slot #2. The terminal device receives the fifth information between a 2^{nd} symbol and a 9^{th} symbol in the slot #2, and determines, based on the fifth information, that a band after switching is a band #16. In this case, the terminal device may determine, based on both the fourth information and the fifth information, that the band #18 needs to be switched to the band #16 on the channel #1 (for example, a fourth state), and the band #20 needs to be switched to the band #18 on the channel #2 (for example, a fifth state).

It should be understood that the solution in this embodiment is also applicable to switching between carriers in a band. This is not described herein by using an example.

In this application, the terminal device may determine, by using the fourth information and the fifth information, a specific band and/or carrier to be interrupted and a band and/or carrier after switching. This avoids a problem of reconfiguring a band corresponding to a channel of the terminal device, reduces a delay, and improves data transmission.

Optionally, it is assumed that the fourth information or the fifth information further includes a field #2. For example, if the terminal device currently receives the fourth information in a slot #2, and the fourth information includes a field #2, the field #2 may indicate the terminal device to send data on a third symbol in a third slot, in other words, the terminal device may start to use the band #16 and the band #18 to send data from a third symbol in a slot #3. For another example, if the terminal device currently receives the fifth information in a slot #2, and the fifth information includes a field #2, the field #2 may indicate the terminal device to send data on a third symbol in a third slot, in other words, the terminal device may start to use the band #16 and the band #18 to send data from a third symbol in a slot #3.

In this application, the terminal device may determine, by using the fourth information and the fifth information, a specific slot in which or a specific symbol on which the uplink data is sent by using a band/carrier after switching, so that after completing the switching between the states, the terminal device receives the data in the specific slot based on the indication of the field #2. This can avoid that the terminal device receives the data before completing the switching between the states, so that data transmission performance is improved.

It may be understood that the examples in the method 200 to the method 500 in embodiments of this application are merely intended to help a person skilled in the art understand embodiments of this application, but are not intended to limit embodiments of this application to specific scenarios in the examples. Definitely, a person skilled in the art may make various equivalent modifications or changes based on the examples in the method 200 to the method 500, and such modifications or changes also fall within the scope of embodiments of this application.

It may be further understood that some optional features in embodiments of this application may be independent of other features in some scenarios, or may be combined with other features in some scenarios. This is not limited.

It may be further understood that the embodiments described in this application may be independent solutions, or may be combined based on intrinsic logic. These solutions all fall within the protection scope of this application. In addition, explanations or descriptions of the terms in the embodiments may be mutually referenced or explained in the embodiments. This is not limited herein.

It should be understood that "predefine" in this application may be understood as "define", "predefine", "store", "pre-store", "pre-negotiate", "preconfigure", "solidify", or "pre-burn".

It may be understood that, in this application, "when", "if", and "in case of" all mean that an apparatus performs corresponding processing in an objective case, are not intended to limit time, does not need the apparatus to necessarily have a determining action during implementation, and do not mean that there is another limitation.

It may be understood that the term "and/or" in this specification describes only an association relationship for describing associated objects and indicates that three relationships may exist. For example, A and/or B may represent the following three cases: Only A exists, both A and B exist, and only B exists. In addition, the character "/" in this specification usually indicates an "or" relationship between the associated objects.

The foregoing mainly describes the solutions provided in embodiments of this application from a perspective of interaction between nodes. It may be understood that, to implement the foregoing function, each node, such as a terminal device or a network device, includes a corresponding hardware structure and/or software module for performing each function. A person skilled in the art should be able to be aware that, in combination with units and algorithm steps in the examples described with reference to embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In this embodiment of this application, functional modules of the terminal device and the network device may be divided based on the foregoing method examples. For example, each functional module may be obtained through division based on each corresponding function, or two or more functions may be integrated into one processing module. The integrated module may be implemented in a form of hardware, or may be implemented in a form of a software functional module. It needs to be noted that, in embodiments of this application, module division is an example, and is merely a logical function division. During actual implementation, another division manner may be used. Descriptions are provided below by using an example in which each functional module is obtained through division based on each corresponding function.

FIG. 6 is a block diagram of a communication apparatus 100 according to an embodiment of this application. As shown in the figure, the apparatus 100 may include a transceiver unit 110 and a processing unit 120.

In a possible design, the apparatus 100 may be the terminal device in the method embodiments, or may be a chip configured to implement a function of the terminal device in the method embodiments. It should be understood that the apparatus 100 may correspond to the terminal device in the method 200 to the method 500 in embodiments of this application, and the apparatus 100 may perform steps corresponding to the terminal device in the method 200 to the method 500 in embodiments of this application.

In a possible implementation, the transceiver unit is configured to receive first information, and the processing unit is configured to control, based on the first information, the transceiver unit to transmit uplink data in a band and/or a carrier after switching.

In a possible implementation, the transceiver unit is configured to send sixth information.

In a possible implementation, the transceiver unit is configured to receive second information, and the processing unit is configured to control, based on the second information, the transceiver unit to transmit uplink data in a band and/or a carrier after switching.

In a possible implementation, the transceiver unit is configured to receive second information, and the processing unit is configured to control, based on the second information, the transceiver unit to transmit uplink data in a band and/or a carrier after switching.

In a possible implementation, the transceiver unit is configured to receive third information, and the processing unit is configured to control, based on the third information, the transceiver unit to transmit uplink data in a band and/or a carrier after switching.

In a possible implementation, the transceiver unit is configured to receive fourth information, the processing unit is configured to control, based on the fourth information, the transceiver unit to receive fifth information, and the processing unit is configured to transmit, based on the fourth information and the fifth information, uplink data in the band and/or the carrier after the switching.

In a possible design, the apparatus 100 may be the network device in the method embodiments, or may be a chip configured to implement a function of the terminal device in the method embodiments. It should be understood that the apparatus 100 may correspond to the network device in the method 200 to the method 500 in embodiments of this application, and the apparatus 100 may perform steps corresponding to the network device in the method 200 to the method 500 in embodiments of this application.

In a possible implementation, the processing unit is configured to determine first information, and the transceiver unit is configured to send the first information.

In a possible implementation, the processing unit is configured to determine second information, and the transceiver unit is configured to send the second information.

In a possible implementation, the processing unit is configured to determine third information, and the transceiver unit is configured to send the third information.

In a possible implementation, the processing unit is configured to determine fourth information and fifth information, and the transceiver unit is configured to send the fourth information and the fifth information.

It should be further understood that the apparatus 100 herein is embodied in a form of functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 100 may be specifically the terminal device or the network device in the foregoing embodiments, and may be configured to perform procedures and/or steps corresponding to the terminal device in the foregoing method embodiments. To avoid repetition, details are not described herein again.

The apparatus 100 in the foregoing solutions has a function of implementing corresponding steps performed by the terminal device or the network device in the foregoing methods. The function may be implemented by hardware, or may be implemented by hardware executing corresponding software. The hardware or the software includes one or more modules corresponding to the foregoing function. For example, the transceiver unit may be replaced by a transceiver (for example, a sending unit in the transceiver unit may be replaced by a transmitter, and a receiving unit in the transceiver unit may be replaced by a receiver device), and another unit, for example, the processing unit, may be replaced by a processor, to separately perform a sending and receiving operation and a related processing operation in the method embodiments.

In addition, the transceiver unit 110 may alternatively be a transceiver circuit (for example, may include a receiving circuit and a sending circuit), and the processing unit may be a processing circuit.

It needs to be noted that the apparatus in FIG. 6 may be the terminal device or the network device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 7 is a block diagram of a communication apparatus 200 according to an embodiment of this application. As shown in the figure, the apparatus 200 includes at least one processor 220. The processor 220 is coupled to a memory, and is configured to execute instructions stored in the memory, to transmit a signal and/or receive a signal. Optionally, the device 200 further includes a memory 230, configured to store instructions. Optionally, the device 200 further includes a transceiver 210, and the processor 220 controls the transceiver 210 to transmit a signal and/or receive a signal.

It should be understood that the processor 220 and the memory 230 may be integrated into one processing device. The processor 220 is configured to execute program code stored in the memory 230 to implement the foregoing functions. In specific implementation, the memory 230 may alternatively be integrated into the processor 220, or may be independent of the processor 220.

It should be further understood that the transceiver 210 may include a transceiver (or referred to as a receiver device) and a transmitter (or referred to as a transmitter device). The transceiver may further include an antenna. There may be one or more antennas. The transceiver 210 may be a communication interface or an interface circuit.

Specifically, the transceiver 210 in the device 200 may correspond to the transceiver unit 110 in the device 100, and the processor 220 in the device 200 may correspond to the processing unit 120 in the device 200.

In a solution, the apparatus 200 is configured to implement operations performed by the terminal device in the foregoing method embodiments.

For example, the processor 220 is configured to execute a computer program or the instructions stored in the memory 230, to implement related operations performed by the radio access network device in the foregoing method embodiments. For example, the processor is configured to perform the method performed by the terminal device in any one of the embodiments shown in the method 200 to the method 500.

In another solution, the apparatus 200 is configured to implement operations performed by the network device in the foregoing method embodiments.

For example, the processor 220 is configured to execute a computer program or the instructions stored in the memory 230, to implement related operations performed by the network device in the foregoing method embodiments. For example, the processor is configured to perform the method performed by the network device in any one of the embodiments shown in the method 200 to the method 500.

It should be understood that a specific process in which each transceiver and each processor perform the foregoing corresponding steps is described in detail in the method embodiments. For brevity, details are not described herein again.

In an implementation process, the steps in the foregoing methods can be implemented by using a hardware integrated logical circuit in the processor, or by using instructions in a form of software. The steps in the methods disclosed with reference to embodiments of this application may be directly performed and completed by using a hardware processor, or may be performed and completed by using a combination of hardware in the processor and a software module. A software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by using a hardware decoding processor, or may be performed and completed by using a combination of hardware in the decoding processor and a software module. A software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory in the systems and methods described in this specification includes but is not limited to these memories and any memory of another proper type.

According to the methods provided in embodiments of this application, this application further provides a computer program product. The computer program product stores computer program code. When the computer program code is run on a computer, the computer is enabled to perform the method performed by the terminal device or the network device in any one of the embodiments of the method 200 to the method 500.

According to the methods provided in embodiments of this application, this application further provides a computer-readable medium. The computer-readable medium stores program code. When the program code is run on a computer, the computer is enabled to perform the methods performed by the terminal device or the network device in the foregoing embodiments.

According to the methods provided in embodiments of this application, this application further provides a communication system. The communication system includes a terminal device and a network device. The terminal device is configured to perform steps corresponding to the terminal device in the foregoing methods 200 to 500, and the network device is configured to perform steps corresponding to the network device in the foregoing methods 200 to 500.

For explanations and beneficial effect of related content of any one of the apparatuses provided above, refer to the corresponding method embodiments provided above. Details are not described herein again.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

In the foregoing apparatus embodiments, a corresponding module or unit performs a corresponding step. For example, a transceiver unit (a transceiver) performs a receiving or sending step in the method embodiments, and a step other than the sending or receiving step may be performed by a processing unit (a processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in the figures, both an application running on a computing device and the computing device may be components. One or more components may reside in a process and/or a thread of execution, and components may be located on one computer and/or distributed between two or more computers. In addition, these components may be executed from various computer-readable media that store various data structures. For example, the components may perform communication by using a local process and/or a remote process and based on a signal having one or more data packets (for example, data from two components interacting with another component in a local system, a distributed system, and/or across a network such as the Internet interacting with another system by using the signal).

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that, ordinal numbers such as "first" and "second" in embodiments of this application are used to distinguish between a plurality of objects, but are not intended to limit sizes, content, a sequence, a time sequence, priorities, importance degrees, or the like of the plurality of objects. For example, a first PDSCH and a second PDSCH may be a same physical channel or different physical channels. In addition, the names do not indicate different information amounts, content, priorities, or importance degrees of the two physical channels.

It should be further understood that, in this application, "at least one" means one or more, and "a plurality of" means two or more. "At least one item (piece)" or a similar expression thereof means one item (piece) or a plurality of items (pieces), that is, any combination of these items, including any combination of singular items (pieces) or plural items (pieces). For example, at least one item (piece) of a, b, or c may indicate a, b, c, a and b, a and c, b and c, or a, b, and c.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first information from a network device, wherein the first information comprises N information blocks, a j^{th} information block in the N information blocks comprises a first field, the first field indicates a band and/or a carrier after switching of the terminal device, the j^{th} information block is associated with a band and/or a carrier before the switching of the terminal device, and N is a positive integer; and
transmitting, by the terminal device based on the first information, uplink data in the band and/or the carrier after the switching.

2. The method according to claim 1, wherein the j^{th} information block further comprises a second field, the second field indicates a time offset between the first information and the uplink data scheduled by the first information, and the uplink data is transmitted in the band and/or the carrier after the switching.

3. The method according to claim 1 or 2, wherein the method further comprises:
sending, by the terminal device, sixth information to the network device, wherein the sixth information is used by the network device to determine the first information, wherein
the sixth information comprises a correspondence between at least one channel of the terminal device and a band, and the band is a band supported by the at least one channel;
the sixth information comprises at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group;
the sixth information comprises at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or
the sixth information comprises at least a switching correspondence that is between bands and that is in a case of switching of the terminal device from at least one first band to at least one second band.

4. A communication method, comprising:
receiving, by a terminal device, second information from a network device, wherein the second information comprises M information blocks, a k^{th} information block in the M information blocks is associated with a band pair of the terminal device, the band pair comprises a band before switching of the terminal device and a band after the switching of the terminal device, and M is a positive integer; and
transmitting, by the terminal device based on the second information, uplink data in the band after the switching.

5. The method according to claim 4, wherein the k^{th} information block further comprises a third field, and the third field indicates a carrier after the switching of the terminal device.

6. The method according to claim 4 or 5, wherein the k^{th} information block comprises a second field, the second field indicates a time offset between the second information and uplink data scheduled by the second information, and the uplink data is transmitted in the band or the carrier after the switching.

7. The method according to any one of claims 1 to 3, wherein the method further comprises:
sending, by the terminal device, sixth information to the network device, wherein the sixth information is used by the network device to determine the second information, wherein
the sixth information comprises a correspondence between at least one channel of the terminal device and a band, and the band is a band supported by the at least one channel;
the sixth information comprises at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group;
the sixth information comprises at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or
the sixth information comprises at least a switching correspondence that is between bands and that is in a case of switching of the terminal device from at least one first band to at least one second band.

8. A communication method, comprising:
receiving, by a terminal device, third information from a network device, wherein the third information comprises a first field, the first field indicates a band and/or a carrier after switching of the terminal device, and a band and/or a carrier before the switching are/is determined by the terminal device according to a preset rule, or the band and/or the carrier before the switching are/is indicated by the network device; and
transmitting, by the terminal device based on the third information, uplink data in the band and/or the carrier after the switching.

9. The method according to claim 8, wherein the third information further comprises a second field, the second field indicates a time offset between the third information and uplink data scheduled by the third information, and the data is transmitted in the band and/or the carrier after the switching.

10. The method according to claim 8 or 9, wherein the third information further comprises a fourth field, and the fourth field indicates a second table in which the time offset is located, or the fourth field indicates an index or a location of the time offset in a first table.

11. The method according to any one of claims 8 to 10, wherein the method further comprises:
sending, by the terminal device, sixth information to the network device, wherein the sixth information is used by the network device to determine the third information, wherein
the sixth information comprises a correspondence between at least one channel of the terminal device and a band, and the band is a band supported by the at least one channel;
the sixth information comprises at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group;
the sixth information comprises at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or
the sixth information comprises at least a switching correspondence that is between bands and that is in a case of switching of the terminal device from at least one first band to at least one second band.

12. A communication method, comprising:
receiving, by a terminal device, fourth information from a network device, wherein the fourth information comprises a fifth field, and the fifth field indicates a first band after switching of the terminal device; and
the fourth information further comprises a sixth field, the sixth field indicates the terminal device to receive fifth information, and the fifth information indicates a second band after the switching of the terminal device;
receiving, by the terminal device, the fifth information, wherein the fifth information indicates the second band after the switching of the terminal device; and
transmitting, by the terminal device based on the fourth information and the fifth information, uplink data in the band after the switching; or
the fourth information further comprises a seventh field, and the seventh field indicates lag time for the fifth field to take effect; and
transmitting, by the terminal device based on the fourth information, the uplink data in the band after the switching.

13. The method according to claim 12, wherein the method further comprises:
sending, by the terminal device, sixth information to the network device, wherein the sixth information is used by the network device to determine the fourth information, wherein
the sixth information comprises a correspondence between at least one channel of the terminal device and a band, and the band is a band supported by the at least one channel;
the sixth information comprises at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group;
the sixth information comprises at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or
the sixth information comprises at least a switching correspondence that is between bands and that is in a case of switching of the terminal device from at least one first band to at least one second band.

14. A communication method, comprising:
determining, by a network device, first information, wherein the first information comprises N information blocks, a j^{th} information block in the N information blocks comprises a first field, the first field indicates a band and/or a carrier after switching of a terminal device, the j^{th} information block is associated with a band and/or a carrier before the switching of the terminal device, and N is a positive integer; and
sending, by the network device, the first information to the terminal device.

15. The method according to claim 14, wherein the j^{th} information block further comprises a second field, the second field indicates a time offset between the first information and the uplink data scheduled by the first information, and the uplink data is transmitted in the band and/or the carrier after the switching.

16. The method according to claim 14 or 15, wherein the method further comprises:
receiving, by the network device, sixth information from the terminal device, wherein the sixth information is used by the network device to determine the first information, wherein
the sixth information comprises a correspondence between at least one channel of the terminal device and a band, and the band is a band supported by the at least one channel;
the sixth information comprises at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group;
the sixth information comprises at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or
the sixth information comprises at least a switching correspondence that is between bands and that is in a case of switching of the terminal device from at least one first band to at least one second band.

17. A communication method, comprising:
determining, by a network device, second information, wherein the second information comprises M information blocks, a k^{th} information block in the M information blocks is associated with a band pair of a terminal device, the band pair comprises a band before switching of the terminal device and a band after the switching of the terminal device, and M is a positive integer; and
sending, by the network device, the second information to the terminal device.

18. The method according to claim 17, wherein the k^{th} information block further comprises a third field, and the third field indicates a carrier after the switching of the terminal device.

19. The method according to claim 17 or 18, wherein the k^{th} information block comprises a second field, the second field indicates a time offset between the second information and uplink data scheduled by the second information, and the uplink data is transmitted in the band or the carrier after the switching.

20. The method according to any one of claims 17 to 19, wherein the method further comprises:
receiving, by the network device, sixth information from the terminal device, wherein the sixth information is used by the network device to determine the second information, wherein
the sixth information comprises a correspondence between at least one channel of the terminal device and a band, and the band is a band supported by the at least one channel;
the sixth information comprises at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group;
the sixth information comprises at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or
the sixth information comprises at least a switching correspondence that is between bands and that is in a case of switching of the terminal device from at least one first band to at least one second band.

21. A communication method, comprising:
determining, by a network device, third information, wherein the third information comprises a first field, the first field indicates a band and/or a carrier after switching of a terminal device, and a band and/or a carrier before the switching are/is determined by the terminal device according to a preset rule, or the band and/or the carrier before the switching are/is indicated by the network device; and
sending, by the network device, the third information to the terminal device.

22. The method according to claim 21, wherein the third information further comprises a second field, the second field indicates a time offset between the third information and uplink data scheduled by the third information, and the data is transmitted in the band and/or the carrier after the switching.

23. The method according to claim 21 or 22, wherein the third information further comprises a fourth field, and the fourth field indicates a second table in which the time offset is located, or the fourth field indicates an index or a location of the time offset in a first table.

24. The method according to any one of claims 21 to 23, wherein the method further comprises:
receiving, by the network device, sixth information from the terminal device, wherein the sixth information is used by the network device to determine the third information, wherein
the sixth information comprises a correspondence between at least one channel of the terminal device and a band, and the band is a band supported by the at least one channel;
the sixth information comprises at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group;
the sixth information comprises at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or
the sixth information comprises at least a switching correspondence that is between bands and that is in a case of switching of the terminal device from at least one first band to at least one second band.

25. A communication method, comprising:
determining, by a network device, fourth information, wherein the fourth information comprises a fifth field, and the fifth field indicates a first band after switching of a terminal device; and
the fourth information further comprises a sixth field, the sixth field indicates the terminal device to receive fifth information, and the fifth information indicates a second band after the switching of the terminal device; or
the fourth information further comprises a seventh field, and the seventh field indicates lag time for the fifth field to take effect; and
sending, by the network device, the fourth information and the fifth information to the terminal device.

26. The method according to claim 25, wherein the method further comprises:
receiving, by the network device, sixth information from the terminal device, wherein the sixth information is used by the network device to determine the fourth information, wherein
the sixth information comprises a correspondence between at least one channel of the terminal device and a band, and the band is a band supported by the at least one channel;
the sixth information comprises at least a switching correspondence that is between bands and that is in a case of switching of the terminal device between a first state and a second state, the first state is that the terminal device supports a first quantity of sent radio frequency chains in a band of a first band group, and the second state is that the terminal device supports a second quantity of sent radio frequency chains in a band of a second band group;
the sixth information comprises at least a switching delay of the switching of the terminal device between the first state and the second state, the first state is that the terminal device supports the first quantity of sent radio frequency chains in the band of the first band group, and the second state is that the terminal device supports the second quantity of sent radio frequency chains in the band of the second band group; and/or
the sixth information comprises at least a switching correspondence that is between bands and that is in a case of switching of the terminal device from at least one first band to at least one second band.

27. A communication apparatus, wherein the communication apparatus comprises a processor and a memory, the memory is configured to store a computer program or instructions, and the processor is configured to execute the computer program or the instructions in the memory, to perform the method according to any one of claims 1 to 3, claims 4 to 7, claims 8 to 11, claims 12 and 13, claims 14 to 16, claims 17 to 20, claims 21 to 24, or claims 25 and 26.

28. A computer-readable storage medium, wherein the computer-readable storage medium stores a computer program, and when the computer program is run on a computer, the computer is enabled to perform the method according to any one of claims 1 to 3, claims 4 to 7, claims 8 to 11, claims 12 and 13, claims 14 to 16, claims 17 to 20, claims 21 to 24, or claims 25 and 26.

29. A computer program product, wherein the computer program product comprises instructions for performing the method according to any one of claims 1 to 3, claims 4 to 7, claims 8 to 11, claims 12 and 13, claims 14 to 16, claims 17 to 20, claims 21 to 24, or claims 25 and 26.
